# EUROPEAN PATENT SPECIFICATION

(11) **EP 2 570 607 B1**
(45) Date of publication and mention of the grant of the patent: **06.05.2020**
(21) Application number: 12169248.7
(22) Date of filing: 24.05.2012
(51) Int. Cl.: F01D 25/24, F01D 11/18, F01D 5/28

(54) **Gas turbine engine with ceramic matrix composite static structure and rotor module, and corresponding method of tip clearance control**
Gasturbinentriebwerk mit statischer Struktur und Rotorbaugruppe aus keramischem Faserverbundwerkstoff und zugehöriges Verfahren zur Regelung des Schaufelspitzenspiels
Moteur à turbine à gaz avec structure statique et ensemble de rotor en composite à matrice céramique et procédé associé de régulation de jeu en bout d'aube

(30) Priority: 26.05.2011 US 201113116207
(43) Date of publication of application: 20.03.2013
(73) Proprietor: United Technologies Corporation, Farmington, CT 06032 (US)
(72) Inventor: Alvanos, Ioannis, West Springfield, MA Massachusetts 01089 (US); Suciu, Gabriel L., Glastonbury, CT Connecticut 06033 (US)
(74) Representative: Dehns

(56) References cited:
- FR-A1- 2 943 942
- JP-A- H09 125 902
- US-A- 4 101 242
- US-A1- 2002 108 376
- US-A1- 2004 047 726
- US-A1- 2009 010 755
- US-A1- 2009 053 050

## Description

### BACKGROUND

The present disclosure relates to a gas turbine engine, and more particularly to Ceramic Matrix Composites (CMC) components therefor.

The turbine section of a gas turbine engine operates at elevated temperatures in a strenuous, oxidizing type of gas flow environment and is typically manufactured of high temperature superalloys. The clearance between a turbine blade and an outer static structure, known as the tip clearance, facilitates gas turbine engine performance. Tip clearances that are too large may result in leakages that are detrimental to turbine performance. Tip clearances that are too small may result in friction or wear. Maintenance of tip clearances at a suitable level facilitates efficient and robust operation.

Conventional commercial gas turbine engine tip clearance control systems typically involve active clearance control (ACC) by impinging cooler air on the outer static structure to better match the rotating hardware, but may have a weight and complexity penalty. Throttle movements on fighter aircraft are too frequent to make ACC practical.

US 2009/0053050 A1 discloses a prior art gas turbine engine and a prior art method of tip clearance control.

US 2004/0047726 A1 discloses a CMC component for a gas turbine engine.

US 2002/0108376 A1 discloses a thermal management system for turbomachinery.

FR 2 943 942 A1 discloses a method of fabricating a turbomachine blade from composites.

US 4101242 discloses a gas turbine engine according to the preamble of claim 1 and a method according to the preamble of claim 7.

US 2009/0010755 A1 discloses a prior art ceramic matrix composite attachment apparatus and method.

JP 9 125902 discloses a prior art disk or blisk made of ceramic composite material.

### SUMMARY

According to the present invention there is provided a gas turbine engine as set forth in claim 1, and a method as set forth in claim 7.

### BRIEF DESCRIPTION OF THE DRAWINGS

Various features will become apparent to those skilled in the art from the following detailed description of the disclosed non-limiting embodiment. The drawings that accompany the detailed description can be briefly described as follows:
Figure 1 is a schematic cross-section of a gas turbine engine;
Figure 2 is an enlarged sectional view of a section of the gas turbine engine; and
Figure 3 is a perspective view of a CMC Outer Air Seal.

### DETAILED DESCRIPTION

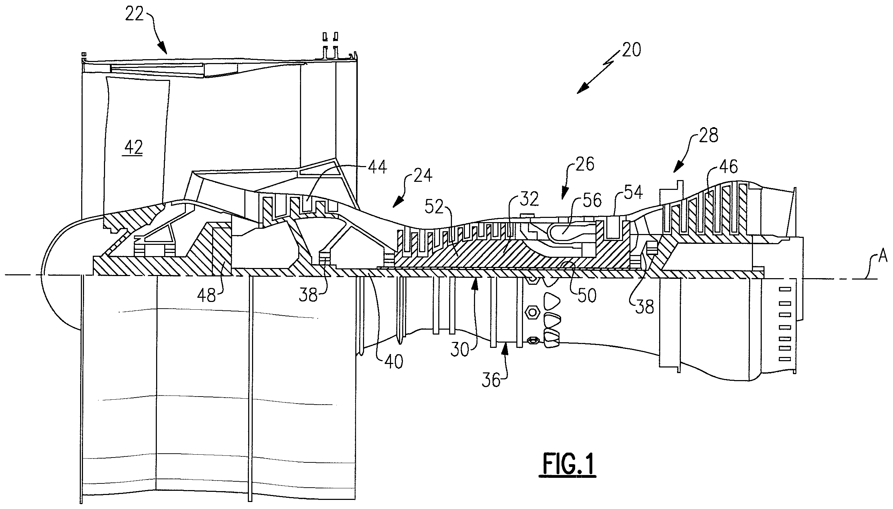

Figure 1 schematically illustrates a gas turbine engine 20. The gas turbine engine 20 is disclosed herein as a two-spool turbofan that generally incorporates a fan section 22, a compressor section 24, a combustor section 26 and a turbine section 28. Alternative engines might include an augmentor section (not shown) among other systems or features. The fan section 22 drives air along a bypass flowpath while the compressor section 24 drives air along a core flowpath for compression and communication into the combustor section 26 then expansion through the turbine section 28. Although depicted as a turbofan gas turbine engine in the disclosed non-limiting embodiment, it should be understood that the concepts described herein are not limited to use with turbofans as the teachings may be applied to other types of turbine engines.

The engine 20 generally includes a low speed spool 30 and a high speed spool 32 mounted for rotation about an engine central longitudinal axis A relative to an engine static structure 36 via several bearing systems 38. It should be understood that various bearing systems 38 at various locations may alternatively or additionally be provided.

The low speed spool 30 generally includes an inner shaft 40 that interconnects a fan 42, a low pressure compressor 44 and a low pressure turbine 46. The inner shaft 40 is connected to the fan 42 through a geared architecture 48 to drive the fan 42 at a lower speed than the low speed spool 30. The high speed spool 32 includes an outer shaft 50 that interconnects a high pressure compressor 52 and high pressure turbine 54. A combustor 56 is arranged between the high pressure compressor 52 and the high pressure turbine 54. The inner shaft 40 and the outer shaft 50 are concentric and rotate about the engine central longitudinal axis A which is collinear with their longitudinal axes.

The core airflow is compressed by the low pressure compressor 44 then the high pressure compressor 52, mixed with fuel and burned in the combustor 56, then expanded over the high pressure turbine 54 and low pressure turbine 46. The turbines 54, 46 rotationally drive the respective low speed spool 30 and high speed spool 32 in response to the expansion.

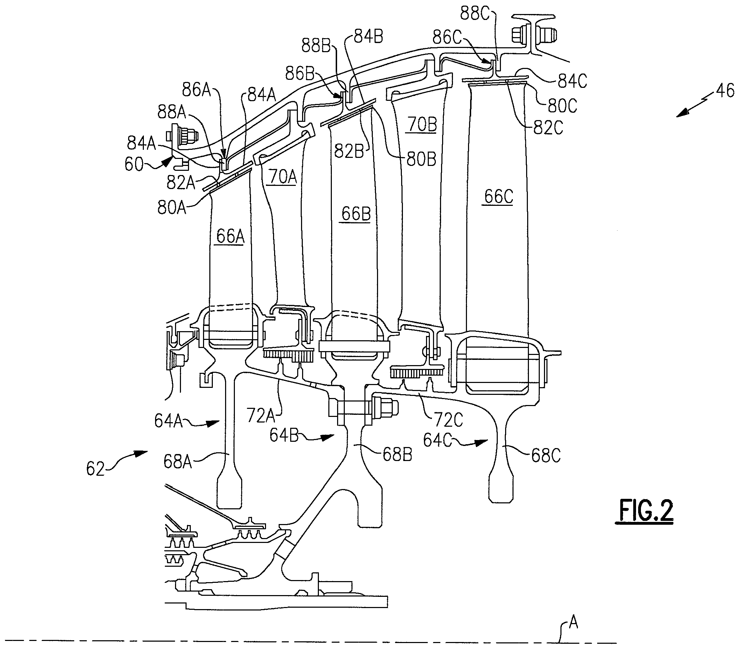

With reference to Figure 2, the low pressure turbine 46 generally includes a turbine case 60 with a multiple of low pressure turbine stages. In the disclosed non-limiting embodiment, the turbine case 60 is manufactured of a ceramic matrix composite (CMC). It should be understood that examples of CMC material for all componentry discussed herein may include, but are not limited to, for example, S200 and SiC/SiC. Although depicted as a low pressure turbine in the disclosed embodiment, it should be understood that the concepts described herein are not limited to use with low pressure turbine as the teachings may be applied to other sections such as high pressure turbine, high pressure compressor, low pressure compressor and intermediate pressure turbine and intermediate pressure turbine of a three-spool architecture gas turbine engine.

A rotor module 62 includes a multiple (three shown) of CMC disks 64A, 64B, 64C. Each of the CMC disks 64A, 64B, 64C include a row of airfoils 66A, 66B, 66C which extend from a respective hub 68A, 68B, 68C. The rows of airfoils 66A, 66B, 66C are interspersed with CMC vane structures 70A, 70B to form a respective number of low pressure turbine stages. It should be understood that any number of stages may be provided. The case 60 and the CMC vane structures 70A, 70B are examples of static structure as defined herein in that the case 60 and the CMC vane structures 70A, 70B do not rotate about engine axis A. This is in contrast with, for example, the rotor module 62 which is an example of rotational structure as defined herein which does rotate about engine axis A.

The CMC disks 64A, 64C include arms 72A, 72C which extend from the respective hub 68A, 68C. It should be understood that a hybrid combination of materials may be utilized, for example, the respective hub 68A, 68B, 68C may alternatively be manufactured of INCO718, Waspaloy, or other metal alloy, while the airfoils 66A, 66B, 66C may be manufactured of a CMC materials It should be understood that various other materials and combinations thereof may alternatively be utilized.

An outer shroud 80A, 80B, 80C of each of the CMC disks 64A, 64B, 64C may each define at least one knife edge seal 82A, 82B, 82C which interface with the CMC Outer Air Seal (OAS) 84A, 84B, 84C. That is, the knife edge seal 82A, 82B, 82C respectively trench into the CMC Outer Air Seal (OAS) 84A, 84B, 84C. It should be understood that the CMC Outer Air Seal (OAS) 84A, 84B, 84C may include abradable materials which are relatively softer than the material of the knife edge seal 82A, 82B, 82C to facilitate trenching. The CMC OAS 84A, 84B, 84C are mounted to the case 60. The CMC OAS 84A, 84B, 84C are full hoop structures.

The airfoils 66A, 66B, 66C of each of the CMC disks 64A, 64B, 64C have a relatively low centrifugal pull which lessens the relative radial growth of the low pressure turbine rotor module 62. Thermal growth of the CMC airfoils 66A, 66B, 66C is also relatively less than conventional alloy materials. The radial growth of the CMC airfoils 66A, 66B, 66C is matched to the growth of the CMC turbine case 60. That is, the radial growth of that rotational structure is matched with the static structure to inherently provide clearance control. "Matched" as defined herein may be considered as generally equivalent - between rate of thermal growth of the static structure and the rate of thermal growth/centrifugal pull growth of the rotational structure such that the airfoils 66A, 66B, 66C maintain tip clearances at a suitable level to facilitate efficient and robust operation during flight operations.

An interface 86A, 86B, 86C is utilized to mount the CMC OAS 84A, 84B, 84C to the turbine case 60 which may alternatively be manufactured of a metallic alloy material to permit relative radial growth therebetween. It should be understood that the interface 86A, 86B, 86C may also be utilized with a turbine case 60 which is manufactured of a CMC material to provide additional radial match capability.

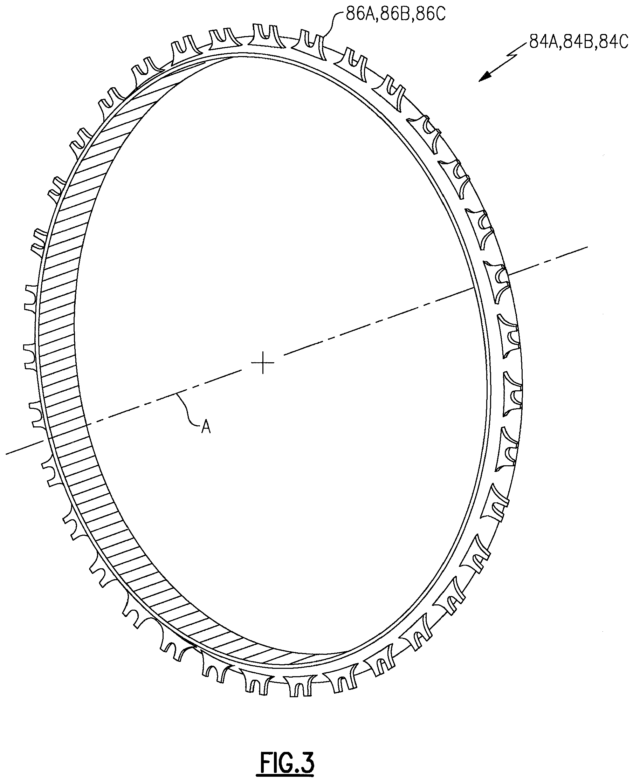

The interface 86A, 86B, 86C is a splined interface (also illustrated in Figure 3) for attachment to the case 60 which includes a corresponding static support structure 88A, 88B, 88C which extend radially inward toward the engine axis A. The static support structure 88A, 88B, 88C receive the interface 86A, 86B, 86C to permit a floating ring structure to further match radial expansion and contraction due to thermal variances yet maintains the concentricity of the CMC OAS 84A, 84B, 84C about engine axis A.

Strategic utilization of CMC materials with their low thermal expansion characteristics permits the radial growth of the rotational structure and stationary structure to be matched so as to provide a controlled tip clearance without the weight and complexity of a conventional clearance control system.

It should be understood that like reference numerals identify corresponding or similar elements throughout the several drawings. It should also be understood that although a particular component arrangement is disclosed in the illustrated embodiment, other arrangements will benefit herefrom.

Although particular step sequences are shown, described, and claimed, it should be understood that steps may be performed in any order, separated or combined unless otherwise indicated and will still benefit from the present disclosure.

The foregoing description is exemplary rather than defined by the limitations within. Various non-limiting embodiments are disclosed herein, however, one of ordinary skill in the art would recognize that various modifications and variations in light of the above teachings will fall within the scope of the appended claims. It is therefore to be understood that within the scope of the appended claims, the disclosure may be practiced other than as specifically described. For that reason the appended claims should be studied to determine true scope and content.

## Claims

1. A gas turbine engine (20) comprising:
a static structure; and
a rotor module (62) with a multiple of airfoils (66A,66B,66C), wherein a tip clearance of the airfoils (66A, 66B, 66C) is maintained inherently during operation by matching a rate of thermal growth and centrifugal pull growth of said rotor module (62) with a rate of thermal growth of said static structure (60),
**characterised in that**:
said multiple of airfoils are a multiple of CMC airfoils and said static structure is a CMC Outer Air Seal (84A,84B,84C), wherein the CMC Outer Air Seal (84A, 84B, 84C) is a full-hoop structure; and
the gas turbine engine (20) further comprises a splined interface (86A, 86B, 86C) and a static support structure (88A, 88B, 88C), the splined interface (86A, 86B, 86C) configured to mount the CMC Outer Air Seal (84A,84B,84C) to the static support structure (88A, 88B, 88C).

2. The gas turbine engine (20) as recited in claim 1, further comprising an abradable material mounted to said CMC Outer Air Seal (84A,84B,84C).

3. The gas turbine engine (20) as recited in claim 1 or 2, wherein said CMC Outer Air Seal (84A,84B,84C) is mounted to a CMC case (60).

4. The gas turbine engine (20) as recited in claim 1 or 2, wherein said CMC Outer Air Seal (84A,84B,84C) is mounted to a metallic alloy case.

5. The gas turbine engine (20) as recited in any preceding claim, wherein said rotor module (62) is defined about an engine longitude axis (A).

6. The gas turbine engine (20) as recited in any preceding claim, wherein said rotor module (62) is:
a Low Pressure Turbine rotor module;
a High Pressure Turbine rotor module; or
a compressor rotor module.

7. A method of tip clearance control of the gas turbine engine (20) of claim 1 comprising matching a rate of thermal growth and a rate of centrifugal pull growth of the rotor module (62) with a rate of thermal growth of the static structure to maintain the tip clearance and provide an inherent tip clearance control.

## Patentansprüche

1. Gasturbinentriebwerk (20), Folgendes umfassend:
eine statische Struktur; und
eine Rotorbaugruppe (62) mit einer Vielzahl von Schaufelprofilen (66A, 66B, 66C), wobei ein Schaufelspitzenspiel der Schaufelprofile (66A, 66B, 66C) während eines Betriebs inhärent erhalten bleibt, indem eine Wärmeausdehnungsrate und eine Zentrifugalkraftanstiegsrate der Rotorbaugruppe (62) an eine Wärmeausdehnungsrate der statischen Struktur (60) angepasst wird,
**dadurch gekennzeichnet, dass**:
die Vielzahl von Schaufelprofilen eine Vielzahl von CMC-Schaufelprofilen sind und die statische Struktur eine CMC-Außenluftabdichtung (84A, 84B, 84C) ist, wobei die CMC-Außenluftabdichtung (84A, 84B, 84C) eine vollständige Ringstruktur ist; und
das Gasturbinentriebwerk (20) ferner eine verzahnte Schnittstelle (86A, 86B, 86C) und eine statische Stützstruktur (88A, 88B, 88C) umfasst, wobei die verzahnte Schnittstelle (86A, 86B, 86C) dazu konfiguriert ist, die CMC-Außenluftabdichtung (84A, 84B, 84C) an der statischen Stützstruktur (88A, 88B, 88C) zu montieren.

2. Gasturbinentriebwerk (20) nach Anspruch 1, ferner ein abreibbares Material umfassend, das an der CMC-Außenluftabdichtung (84A, 84B, 84C) montiert ist.

3. Gasturbinentriebwerk (20) nach Anspruch 1 oder 2, wobei die CMC-Außenluftabdichtung (84A, 84B, 84C) an einem CMC-Gehäuse (60) montiert ist.

4. Gasturbinentriebwerk (20) nach Anspruch 1 oder 2, wobei die CMC-Außenluftabdichtung (84A, 84B, 84C) an einem Metalllegierungsgehäuse montiert ist.

5. Gasturbinentriebwerk (20) nach einem der vorhergehenden Ansprüche, wobei die Rotorbaugruppe (62) um eine Triebwerkslängsachse (A) definiert ist.

6. Gasturbinentriebwerk (20) nach einem der vorhergehenden Ansprüche, wobei die Rotorbaugruppe (62) Folgendes ist:
eine Niederdruckturbinenrotorbaugruppe;
eine Hochdruckturbinenrotorbaugruppe; oder
eine Kompressorrotorbaugruppe.

7. Verfahren zur Regelung des Schaufelspitzenspiels des Gasturbinentriebwerks (20) nach Anspruch 1, Folgendes umfassend
Anpassen einer Wärmeausdehnungsrate und einer Zentrifugalkraftanstiegsrate der Rotorbaugruppe (62)
an eine Wärmeausdehnungsrate der statischen Struktur, um das Schaufelspitzenspiel beizubehalten und eine inhärente Regelung des Schaufelspitzenspiels bereitzustellen.

## Revendications

1. Moteur à turbine à gaz (20) comprenant :
une structure statique ; et
un module de rotor (62) avec une pluralité de profils aérodynamiques (66A, 66B, 66C), dans lequel un jeu d'extrémité des profils aérodynamiques (66A, 66B, 66C) est maintenu de manière inhérente pendant le fonctionnement en faisant correspondre un taux de croissance thermique et de croissance de traction centrifuge dudit module de rotor (62) avec un taux de croissance thermique de ladite structure statique (60),
**caractérisé en ce que** :
ladite pluralité de profils aérodynamiques est une pluralité de profils aérodynamiques CMC et ladite structure statique est un joint d'étanchéité à l'air extérieur CMC (84A, 84B, 84C), dans lequel le joint d'étanchéité à l'air extérieur CMC (84A, 84B, 84C) est une structure circulaire ; et
le moteur à turbine à gaz (20) comprend en outre une interface cannelée (86A, 86B, 86C) et une structure de support statique (88A, 88B, 88C), l'interface cannelée (86A, 86B, 86C) étant configurée pour monter le joint d'étanchéité à l'air extérieur CMC (84A, 84B, 84C) sur la structure de support statique (88A, 88B, 88C).

2. Moteur à turbine à gaz (20) selon la revendication 1, comprenant en outre un matériau abradable monté sur ledit joint d'étanchéité à l'air extérieur CMC (84A, 84B, 84C).

3. Moteur à turbine à gaz (20) selon la revendication 1 ou 2, dans lequel ledit joint d'étanchéité à l'air extérieur CMC (84A, 84B, 84C) est monté sur un carter CMC (60).

4. Moteur à turbine à gaz (20) selon la revendication 1 ou 2, dans lequel ledit joint d'étanchéité à l'air extérieur CMC (84A, 84B, 84C) est monté sur un carter en alliage métallique.

5. Moteur à turbine à gaz (20) selon une quelconque revendication précédente, dans lequel ledit module de rotor (62) est défini autour d'un axe longitudinal de moteur (A).

6. Moteur à turbine à gaz (20) selon une quelconque revendication précédente, dans lequel ledit module de rotor (62) est :
un module de rotor de turbine basse pression ;
un module de rotor de turbine haute pression ; ou
un module de rotor de compresseur.

7. Procédé de régulation de jeu d'extrémité du moteur à turbine à gaz (20) selon la revendication 1
comprenant la mise en correspondance d'un taux de croissance thermique et d'un taux de croissance de traction centrifuge du module de rotor (62)
avec un taux de croissance thermique de la structure statique pour maintenir le jeu d'extrémité et fournir une régulation de jeu d'extrémité inhérente.
